# EUROPEAN PATENT APPLICATION

(11) **EP 1 107 552 A2**
(43) Date of publication of application: **13.06.2001**
(21) Application number: 99124664.6
(22) Date of filing: 10.12.1999
(51) Int. Cl.: H04M 3/22, H04M 19/00

(54) **Apparatus and method for testing subscriber loop interface circuits**

(30) Priority: 10.12.1999 US 208457
(71) Applicant: Intersil Corporation, Palm Bay, Florida 32905 (US)
(72) Inventor: Ludeman, Christopher, Palm Bay, Florida 32905 (US)
(74) Representative: Neugebauer, Jürgen, Dipl.Phys.

(57) **Abstract**

A method and apparatus for internally testing portions of a subscriber loop interface circuit. Testing is conducted on a semiconductor circuit including the subscriber loop interface circuit. The portion of the subscriber loop interface circuit being tested may be the ring trip detector and/or the off-hook detect circuit. Testing of may be conducted without disabling the capability of the subscriber loop interface circuit to monitor the hook status of a subscriber.

## Description

This invention relates to semiconductor integrated circuits having a subscriber loop interface circuit and, more specifically, relates to semiconductor integrated circuits having a subscriber loop interface circuit including circuitry for internally testing the operation of the subscriber loop interface circuit.

A subscriber loop interface circuit ("SLIC") is employed as an interface between a subscriber such as a residential telephone subscriber and a subscriber network. A SLIC may provide functions such as two-to-four wire conversion, battery feed, line supervision, or common mode rejection.

A subscriber loop includes a SLIC, a subscriber terminal device (e.g., a telephone), and a pair of subscriber lines connecting the SLIC and the subscriber terminal device.

A known technique for using SLIC's in a subscriber loop, a central office operating as a switching station includes a SLIC for every subscriber being served by the central office. The central office may also include relays for connecting a ringing signal, a tone signal, or an incoming communication to each SLIC.

To maintain a high degree of reliability, the central office may include dedicated test hardware and software for the purpose of testing the integrity of subscriber loops. The test equipment may include hardware and software for testing the integrity of subscriber loop interface circuits. The test hardware resides in the central office and is shared for testing several subscriber loops. The central office may include electromechanical relays or solid state switches for connecting each subscriber loop interface circuit to test hardware.

Testing of SLIC's at a central office is usually extensive and includes leakage, capacitance, detection, return loss, and continuity testing. Testing of SLIC's at a central office may also include loop back testing. Typically, a loop back test is conducted by placing a load across the two subscriber line terminals of a SLIC and measuring the resulting current flow. The load may be a 600 ohm resistor. The load is typically placed off-chip to protect the SLIC semiconductor material from heat that may be generated by the load during testing. During this technique for loop back testing, a SLIC is unable to detect a subscriber off-hook signal and, therefore, the subscriber is locked out during testing.

Testing may also be required in other subscriber environments. In loop carrier systems, SLIC's are employed in remote stations. In general, each remote station serves a small number of subscribers and includes a physical or wireless connection to a central office. Loop carrier systems are typically smaller in size and less costly than systems such as residential phone systems. Providing SLIC testing in a remote station may substantially increase the cost and overhead in building a loop carrier system. However, the cost of servicing remotely located stations may also be costly.

The present invention includes a semiconductor integrated circuit having a subscriber loop interface circuit with a ring trip detector adapted to receive signals on a subscriber loop for detecting an off-hook signal while a ringing signal is on the subscriber loop, characterized in that the inclusion on the integrated circuit of first testing means operatively coupled to said ring trip detector for testing said ring trip detector, in which said first testing means includes means for providing a first current signal to at least one of a plurality input terminals of said ring trip detector, and the provided current signal is of a sufficient magnitude to trigger said ring trip detector.

An object of the present invention is to provide a semiconductor circuit having a subscriber loop interface circuit comprising a circuit for testing a ring trip detector portion of the subscriber loop interface circuit.

Another object is to provide an semiconductor circuit having a subscriber loop interface circuit including a circuit for testing an off-hook detect portion of the subscriber loop interface circuit.

The present invention includes a method for internally testing portions of a subscriber loop interface circuit characterized by:
(a) detecting signals on a subscriber line operatively coupled to the subscriber loop interface circuit;
(b) initiating testing during detected signals being below a first signal threshold indicating an off-hook subscriber; and
(c) testing a ring trip detector portion of the subscriber loop interface circuit.

The invention will now be described, by way of example, with reference to the accompanying drawing:

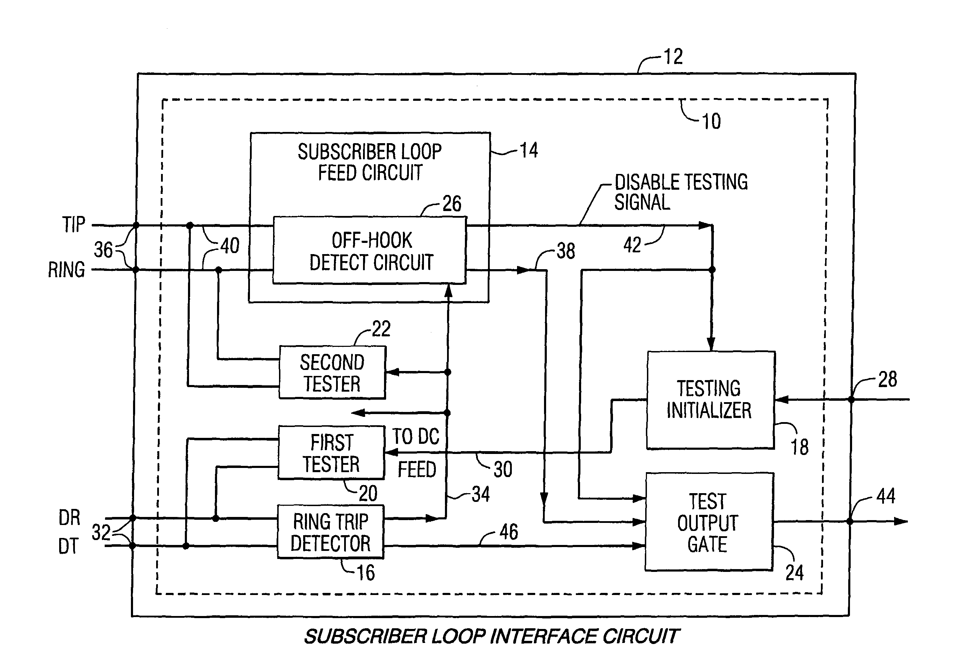

Figure 1 is a functional block diagram illustrating an embodiment of a semiconductor circuit including a subscriber loop interface circuit of the present invention.

Figure 1 discloses a subscriber loop interface circuit 10 in a semiconductor circuit 12 and include a subscriber loop feed circuit 14, a ring trip detector 16, a testing initializer 18, a first tester 20, a second tester 22, and a test output gate 24. An off-hook detect circuit 26 may be a part of the subscriber loop feed circuit 14.

In operation, testing of both the ring trip detector 16 and the off-hook detect circuit 26 may be initiated by placing a signal on a single control terminal 28. A terminal is considered to be a junction on the semiconductor circuit 12, SLIC 10, and/or a portion of the SLIC. Testing may also be initiated by using an internal node activated by a digital command signal received by the subscriber loop interface circuit. The command signal when received may initiate a testing state from a predetermined number of other SLIC states.

In typical SLIC designs, a ring signal, a high voltage signal generated by a central ring generator, is always applied to the ring trip detector terminals 32, The input signals on the ring trip detector terminals 32 are identical as long as the SLIC is in a non-rining state.

Ringing of a subscriber terminal device may generally be accomplished by a central office sending a control code to a SLIC initiating a "ringing" state and activating a ring relay for connecting the subscriber terminal device to the ring trip detector terminals (e.g., establishing a subscriber loop), When the ring relay is activated, a load such as a bell circuit may be placed across the subscriber lines of a subscriber loop. The load may imbalance the voltages or currents at the ring trip terminals. Typically, the ring trip detector 16 monitors the difference (imbalance) between the voltages or currents at the ring trip detector terminals 32 to detect a difference of a sufficient magnitude which indicates an off-hook condition during ringing. During ringing, the difference between the voltages or currents is usually not enough to trip the threshold set in the ring trip detector. If during ringing a subscriber terminal device is placed in an off-hook condition, then the load across the subscriber lines increases significantly. The increase in load may cause a dc current difference on the ring trip device terminals that is sufficient to trip the detector (i.e., the "ring trip" or "off hook" conditions is indicated). Any ac current difference is typically filtered using a capacitor.

In conventional SLIC design, as long as there is current or voltage difference at the ring trip detector terminals, the ring trip detector generates a zero crossing signal for use in other portions of the SLIC,

When testing is initiated, the test initializer 18 may transmit a signal to the first tester 20 via line 30, The first tester 20 may include a current source having a connection to at least one of the ring trip detector terminals 32. In response to the test initializer 18, the first tester 20 unbalances the identical input signals on the ring trip detector terminals 32. The purpose of unbalancing the input signals is to simulate an off-hook condition at the input to the ring trip detector 16 and trigger an output signal RTD on line 34. Activation of the output signal RTD is an indication that the ring trip detector 16 is operating correctly. The ring trip detector 16 always generates a zero crossing signal such as a square wave signal on line 46 while the signal on the ring trip detector terminals 32 is sufficiently imbalanced. The zero crossing signal may be generated at twice the ringing frequency.

The output signal RTD when received by the second tester 22 may activate the second tester 22. The output signal RTD may be received by the off-hook detect circuit to select a first signal threshold as indicating a simulated off-hook subscriber condition and a second signal threshold (higher than the first signal threshold) as indicating an actual off-hook subscriber condition. When activated, the second tester 22 may place a defined current source across the subscriber loop that is sufficient to activate the off-hook detect circuit 26. The second tester 22 may include a current source connected across lines 40. If the off-hook detect circuit 26 detects the first signal threshold, the off-hook detect circuit may generate an internal switch hook detect signal on line 38.

The subscriber loop feed circuit 14 may include circuitry for sensing voltage or current signals on lines 40. Techniques for sensing signals on lines 40 are generally known in the art of SLIC design.

The internal switch hook detect signal on line 38 may be an indication that the off-hook detect circuit is operating correctly. The internal switch detect signal along with the zero crossing signal may be received by the test output gate 24 to generate a pulsing output signal at the ringing frequency as an indication of test results. The pulsing output signal may be placed on a single terminal 44 of the subscriber loop interface circuit. No extra leads or terminals may be needed for internally testing the subscriber loop interface circuit since the command signal may be placed on an existing terminal for sending command signals to the SLIC and the output terminal 44 may be for dual use with another SLIC function,

During testing, a subscriber terminal device connected to the subscriber lines (TIP and RING) may be placed in an off-hook condition (i.e., an off-hook subscriber). The off-hook detect circuit 26 may monitor for a predetermined increase in current flowing on lines 40 to detect the off-hook subscriber. For example, the off-hook detect circuit may measure the signal on lines 40 to determine the difference between the first signal threshold (indicating a detected simulated off-hook subscriber) and the signal on lines 40. When the signal on lines 40 reaches the second signal threshold, the off-hook detect circuit 26 may trigger to indicate an actual off-hook condition. The off-hook detect circuit may include a first comparator for detecting the first signal threshold as indicating a simulated off-hook subscriber condition and a second comparator for detecting the second signal threshold as indicating an off-hook subscriber. The signal threshold dichotomy may be selected using the output signal RTD from the ring trip detector 16. If, during testing, an off-hook subscriber is detected, the off-hook detect circuit 26 may generate a disable testing signal on line 42 which may be provided to the testing initializer 18 and the test output gate 24. The disable testing signal may set the pulsing signal of the test output gate as being continuously low. In non-testing operation of the subscriber loop interface circuit, an off-hook subscriber may be identified by the detection of the first signal threshold by the off-hook detect circuit 26. The first tester 20 and the second tester 22 with the use of the two signal thresholds allow for simultaneous testing of the off-hook detect circuit and ring trip detector without disabling the subscriber loop interface circuit during testing.

The output signal RTD may also be received by the DC feed circuit portion (not shown) of the subscriber loop interface circuit. In response to receiving the output signal RTD, the DC feed circuit may control the voltage supplied to the subscriber line terminals (TIP and RING terminals) 36 of the subscriber loop interface circuit to thereby maintain the voltage across the terminals 26 at a constant predetermined value during testing. The voltage across the subscriber line terminals 36 is defined to be a constant voltage during testing so that the full loop voltage is available for loop feeding. Maintaining the loop voltage at a constant during testing allows for the subscriber loop interface circuit to have the same off-hook detection performance as during non-testing.

The loop feed characteristic of the subscriber loop interface circuit may be the same during testing and during other SLIC operations except that during testing the SLIC is in a constant voltage mode until the second signal threshold is detected.

A method and apparatus for internally testing portions of a subscriber loop interface circuit. Testing may be conducted on a semiconductor circuit including the subscriber loop interface circuit. The portion of the subscriber loop interface circuit being tested may be the ring trip detector and/or the off-hook detect circuit. Testing of may be conducted without disabling the capability of the subscriber loop interface circuit to monitor the hook status of a subscriber.

## Claims

1. A semiconductor integrated circuit having a subscriber loop interface Circuit with a ring trip detector adapted to receive signals on a subscriber loop for detecting an off-hook signal while a ringing signal is on the subscriber loop, characterized in that the inclusion on the integrated circuit of first testing means operatively coupled to said ring trip detector for testing said ring trip detector, in which said first testing means includes means for providing a first current signal to at least one of a plurality input terminals of said ring trip detector, and the provided current signal is of a sufficient magnitude to trigger said ring trip detector.

2. A semiconductor integrated circuit as claimed in claim 1 wherein the subscriber loop interface circuit includes an off-hook detect portion for detecting an off-hook signal on the subscriber loop, and further includes second testing means responsive to said first means and operatively coupled to said off-hook detect portion for internally testing said off-hook detect portion.

3. A circuit as claimed in claim 2 characterized in that said second testing means includes means for providing a second current signal to both of the input terminals of said off-hook detect portion.

4. A circuit as claimed in claim 3 characterized in that said second testing means includes means at said off-hook detect portion for detecting a first and a second signal threshold.

5. A semiconductor integrated circuit having a subscriber loop interface circuit with an off-hook detect circuit for detecting an off-hook signal on the subscriber loop, characterized in that the inclusion on the integrated circuit of testing means for internally testing said off-hook detect portion, in which said testing means includes means for providing a current signal to both of the input terminals of said off-hook detect circuit, and said testing means includes means at said off-hook detect circuit for detecting a first and a second signal threshold.

6. A semiconductor integrated circuit having a subscriber loop interface circuit including (i) a ring trip detector adapted to receive signals on a subscriber loop for detecting an off-hook signal while a ringing signal is on the subscriber loop and (ii) a subscriber loop feed circuit adapted to receive signals from a subscriber terminal device on the subscriber loop for establishing off-hook communications with the subscriber terminal device, said subscriber loop feed circuit having an off-hook detect portion for detecting an off-hook signal on the subscriber loop, characterized in that the inclusion on the integrated circuit of first testing means operatively coupled to said ring trip detector for testing said ring trip detector; and second testing means responsive to said first testing means and operatively coupled to said subscriber loop feed circuit for internally testing said off-hook detect portion.

7. A subscriber loop interface circuit having an off-hook detect circuit operatively coupled to a subscriber loop for detecting a first signal threshold indicating an off-hook subscriber and a ring trip detector for detecting an off-hook signal while a ringing signal is on the subscriber loop, characterized in that the off-hook detect circuit having means for detecting a second signal threshold higher than the first signal threshold, initialization means for initiating internal testing of said ring trip detector and said off-hook detect circuit, said initialization means adapted to receive a command signal for initiating testing, first testing means responsive to said initialization means and operatively coupled to said ring trip detector for testing said ring trip detector, threshold selecting means responsive to said first testing means and operatively coupled to said off-hook detect circuit for selecting the second signal threshold as indicating an off-hook subscriber and the first signal threshold as indicating an off-hook subscriber simulation, second testing means responsive to said first testing means for testing the off-hook detect circuit to detect the first signal threshold, and disabling means for disabling internal testing of the subscriber loop interface circuit in response to said off-hook detect circuit detecting the second signal threshold.

8. A subscriber loop interface circuit as claimed in claim 7characterized in that said first testing means includes means for providing a current signal to at least one of the input terminals of said ring trip detector, in which said second testing means includes means for providing a current signal to both of the input terminals of said off-hook detect circuit.

9. A method for internally testing portions of a subscriber loop interface circuit characterized by:
(a) detecting signals on a subscriber line operatively coupled to the subscriber loop interface circuit;
(b) initiating testing during detected signals being below a first signal threshold indicating an off-hook subscriber; and
(c) testing a ring trip detector portion of the subscriber loop interface circuit.

10. A method as claimed in claim 9 characterized in that the steps of in response to testing the ring trip detector, selecting a second signal threshold as indicating an off-hook subscriber and the first signal threshold as indicating a simulated off-hook subscriber, testing an off-hook detect portion of the subscriber loop interface circuit to detect the first signal threshold, including the steps of detecting the second signal threshold and in response to detecting the second signal threshold disabling all testing of the subscriber loop interface circuit
